(19) Europäisches Patentamt
European Patent Office
Office européen des brevets

(11) **EP 1 700 872 A2**

(12) **EUROPEAN PATENT APPLICATION**

(43) Date of publication:
**13.09.2006 Bulletin 2006/37**

(21) Application number: **06110106.9**

(22) Date of filing: **17.02.2006**

(51) Int Cl.:
***C08G 18/10*** (2006.01) ***C08G 18/30*** (2006.01)
***A61L 27/18*** (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.03.2005 EP 05005245**

(71) Applicant: **RADI MEDICAL SYSTEMS AB**
**754 50 Uppsala (SE)**

(72) Inventors:
- **Asplund, Basse**
  **S-752 26 Uppsala (SE)**
- **Hillborn, Jöns**
  **S-193 32 Sigtuna (SE)**
- **Mathisen, Torbjörn**
  **S-125 42 Älvsjö (SE)**

(74) Representative: **Holmberg, Nils Anders Patrik et al**
**Dr Ludwig Brann Patentbyra AB**
**P.O. Box 17192**
**104 62 Stockholm (SE)**

(54) **Polyureaurethane material and method of producing a polyureaurethane material**

(57) The present invention relates to a linear polyureaurethane polymer, produced without the use of any chain extender. The hard block of the resulting polymer thus consists of diisocyante groups linked to each other via without the presence of any chain extender component. The hard block of the polyureaurethane material is preferably synthesized by using diisocyante groups in the form of lysine diisocyanate (LDI). The soft block component of the polyureaurethane material is preferably poly(epsilon-caprolactone) (PCL). The invention also relates to a method of producing a polyureaurethane polymer, which in short comprises the steps of reacting a soft block component with a diisocyante group in order to prepare a prepolymer component, combining the prepolymer component with a catalyst in order to define a reaction solution and adding water to the reaction solution, preferably carried to the reaction solution in vapour phase.

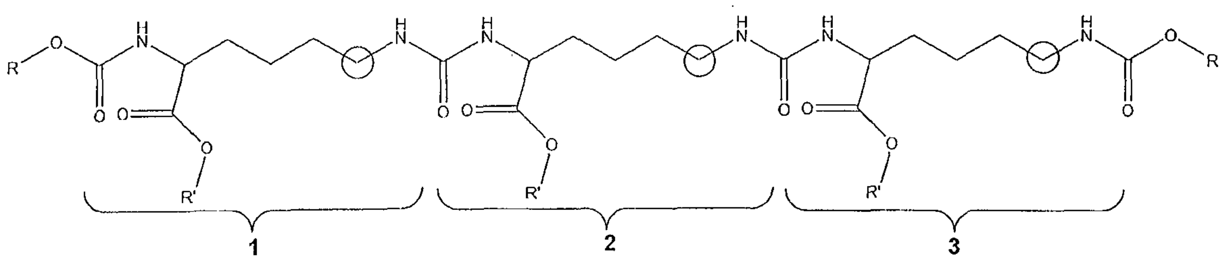

1 2 3

Fig. 1

EP 1 700 872 A2

## Description

### Technical field

The present invention relates to a linear polyureaurethane polymer, comprising at least one hard block and at least one soft block component, wherein the hard block of the resulting polymer is derived from diisocyante groups without the presence of a chain extender. There is thus no chain extender component present in the at least one hard block.

### Background art

Polyurethane is a well known polymer belonging to a most versatile type of polymer that is widely used within a wide variety of fields. Within the medical field, polyurethane is often used in for instance pacemakers, lead insulation, vascular grafts, heart assist balloon pumps, artificial heart bladders etc.

Polyurethanes are polymers, containing at least one urethane linkage (1) or at least one urea linkage (2) in its backbone:

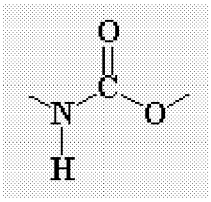
(1)

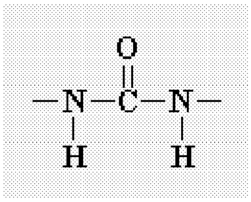
(2)

A polyurethane containing a urea linkage is often referred to as a polyurea or a polyureaurethane, however as used in this application, the term "polyurethane" refers to a polymer containing a urethane linkage as well as to a polymer containing a urea linkage, unless otherwise specified.

Within the medical field, polyurethanes are predominantly thermoplastic elastomeric block copolymers containing "hard" and "soft" blocks. The hard blocks have glass transition temperatures above room temperature and constitute glassy or semicrystalline reinforcing blocks. The glass transition temperatures of the soft blocks are on the other hand much below room temperature, allowing them to give a rubbery character to the material. The hard blocks are held together by physical cross links. The physical cross links are strong in polyurethanes, since polyurethanes are capable of forming strong hydrogen bonds between an oxygen atom in one chain and a hydrogen atom in another, as shown below in (3) with reference to a polyurethane comprising urethane linkages in its backbone. In (3) the groups R represent the soft blocks between the hard blocks, which soft blocks are often composed of polyethers, polyesters or polycarbonates.

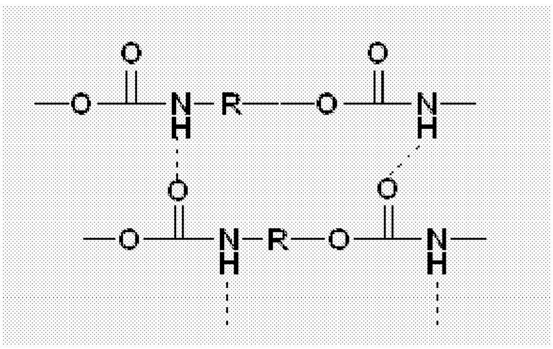
(3)

Polyurethanes are conventionally prepared by in a first step preparing a pre-polymer component by linking a diisocyanate group to a diol component comprising a hydroxyl group in each end of the molecule, and thereafter, in a following step, adding a chain extender to the prepolymer, most often a lower diamine or diol group, for instance ethylenediamine or 1,4-butandiol, see (4) below. The hard block of the resulting polymer then comprises the diisocyante derived groups and a chain extender component linked via a urethane or urea linkage. In (4) below, the use of a diamine group as the chain extender will produce a polymer comprising urea linkages and the use of a diol group will produce

urethane linkages.

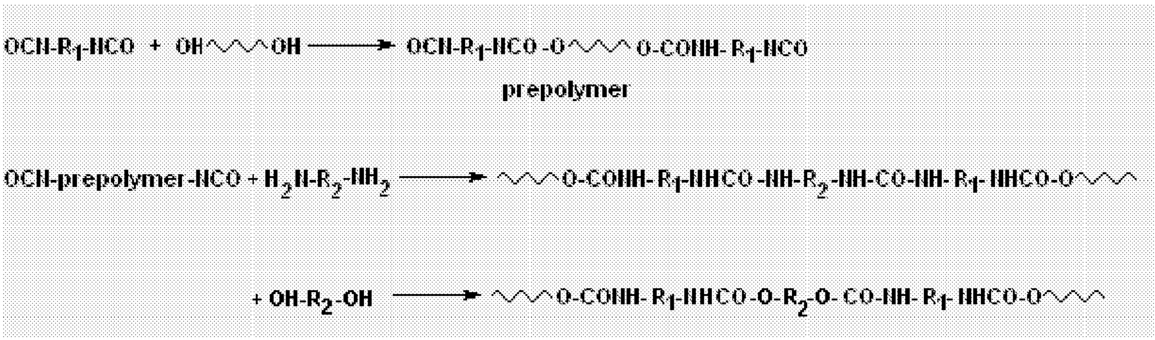

(4)

In the preparation of polyurethanes, commonly used diisocyanate groups are hexamethylene-diisocyanate (HDI), 4,4'-methylene-bis(phenyl isocyanate) (MDI), 4,4'-methylenebis(cyclohexane isocyante) (HMDI) and 2,4-toluene diisocyante (TDI). However, said diisocyante groups may constitute a problem, in particular when the polyurethane material is used as for instance a material in an implanted device, since said diisocyante groups, on degradation, produce a diamine that might be toxic. In the art, the problem has been overcome by instead using a lysine based diisocyanate group (5), as the diisocyante group in the first step of the polyurethane preparation, i.e. a diisocyante group that is based on the amino acid lysine, existing naturally in the human or animal body.

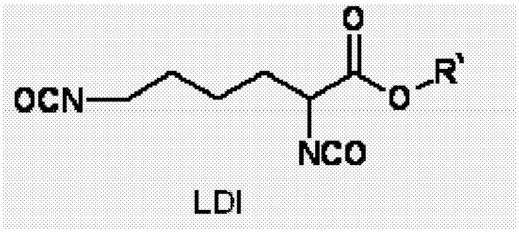

(5)

Polyurethanes synthesized by using LDI, with a variety of soft blocks and chain extenders, have been studied during the recent years. Zhang et al. (Jian-Ying Zhang, Ph.D et al., "Three-Dimensional Biocompatible Ascorbic Acid-Containing Scaffold for Bone Tissue Engineering", TISSUE ENGINEERING, Vol. 9, no.6, 2003, 1143-1157) developed a biodegradable, biocompatible three-dimensional polyureaurethane matrix, synthesized with LDI, ascorbic acid (AA), glycerol and polyethylene glycol (PEG). An LDI-glycerol-PEG-AA-prepolymer was allowed to react with water to produce a cross-linked spongy polyureaurethane material.

Indeed, the polyureaurethane material produced by Zhang et al, is produced without the use of any chain extender, so that one LDI derived group is linked to another LDI derived group via an urea linkage, and no chain extender component is thus present in the hard block. However, said polyureaurethane material is cross-linked and exists in a three-dimensional structure. Also the number of diisocyante derived groups in the hard block is not more than two.

At the time of writing, it is believed that there exists no non-crosslinked polyureaurethane material, produced without the use of any chain extender, so that the hard block(s) of the resulting polymer comprises diisocyante derived groups linked to each other without the presence of any chain extender component.

**Summary of the invention**

The present inventors have developed a linear polyureaurethane material, in which the hard block(s) is/are derived from diisocyanate groups without the presence of any chain extender. The number of diisocyante derived groups in the hard blocks can be varied, and thus the properties of the polyureaurethane material can be effectively tailored for its specific use. In the present application, the term "linear", as in linear polyureaurethane material/polymer, is to be understood as a substantially linear polymer material comprising little or no long chain branching, that is to say a non-crosslinked polymer. The term "polyureaurethane polymer" is to be understood as a polymer having at least one hard block comprising at least one urea linkage linking the diisocyante derived groups to each other. Thus, this does not exclude the presence of other linkages linking the diisocyante derived groups in such a hard block, or the presence of a hard block not comprising an urea linkage.

According to the literature (E. Yilgör, Polymer, 42 (2001) 7953-7959, "Hydrogen bonding: a critical parameter in designing silicone copolymers"; J. T. Garrett, Macromolecules, 33, 2000, 6353-6359, "Microphase separation of segmented poly(urethane urea) block copolymers") an increasing amount of urea linkages is also expected to give rise to a polyureaurethane material having improved strength as compared to the currently known polyurethane materials. This is due to fact that the hydrogen bonds that hold together the hard blocks of the polyurethane material, is stronger in a polyurethane material containing urea linkages, see (6) below, than in a polyurethane material containing urethane linkages.

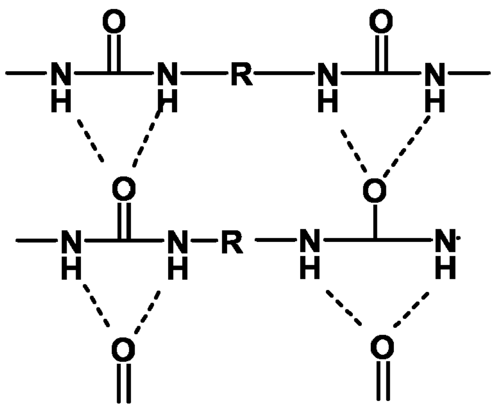

(6)

Moreover, the present inventors have developed a new method of producing polyureaurethane materials, such as the inventive linear polyureaurethane, which is a new and simplified method that is easier to perform than the currently used methods of producing polyureaurethanes.

**Brief description of the drawings**

Fig. 1 illustrates an example of a strictly linear hard block of the resulting polymer when the hard block comprises three diisocyante derived groups in the form of LDI derived groups,

Fig. 2 illustrates an example of a hard block of the resulting polymer when the hard block comprises three diisocyante derived groups in the form of LDI derived groups, but when said hard block comprises a short chain branch,

Fig. 3 shows an NMR-spectra of the polyureaurethane material produced in example 1.

Fig. 4 shows an NMR-spectra of the polyureaurethane material produced in example 2.

**Detailed description of the invention**

The inventive linear polyureaurethane material and the inventive method of producing a polyureaurethane material are best described by ways of, and with reference to, the illustrative examples of producing the inventive polyureaurethane material as well as the analysis thereof, which are set forth below. However, the inventive linear polyureaurethane material is not limited to the inventive method of production but the inventive material can just as well be produced by for instance modified versions of the inventive method, since the skilled person is well capable of modifying the teachings of the present application. It is also to be understood that the inventive material is not restricted to the examples as set forth below, but that several modifications are conceivable within the scope of the attached claims.

In the preparation of a polyureaurethane material, such as the inventive material, the method comprises, in short, the steps of:

- reacting a soft block component with a diisocyante group in order to prepare a prepolymer component and defining a reaction solution
- adding water to the reaction solution.

In an optional step, a catalyst is added to the reaction solution prior to the addition of water.

The inventive linear polyureaurethane material, is produced without adding a chain extender to the prepolymer, which is the conventional procedure in the art when preparing polyureaurethane materials. In the method of producing the inventive polyureaurethane material, such as in the inventive method, the number of reactants involved is thus lower than in the currently known methods of producing polyureaurethane materials. However, the function of the water that is added to the reaction solution, is to act as a sort of a chain extender since amine groups are produced when water is added, but the hard block of the resulting polymer comprises no chain extender component.

The produced linear polyureaurethane material is indeed not cross linked, as will be experimentally determined below, even though the amount of diisocyanate and catalyst used in the experiments set forth below generally is expected to give rise to a cross linked material. However, the conventionally used reaction temperature is in that case higher. As will be apparent from the examples below, the reaction temperature used when producing the linear polyureaurethanes is lower than said conventionally used temperature and especially when using an ice-water bath to cool the reaction solution, whereupon the reaction temperature is in the range of approximately 10-20°C. Moreover, when adding the water, the excess of diisocyantes will react with each other and produce dimers and trimers and they will not end up in the polymer and crosslink the same.

Due to the fact that the soft block component, which will be described in further detail below, is a polymer that does not have an exact molecular weight, but rather a molecular weight distribution, it is very complicated to predetermine the amount of water that is required to be added to the reaction solution. Therefore, in the inventive method, the water is preferably continuously carried to said solution in its vapour phase by an inert gas, such as for instance $N_2$. By continuously adding water to the reaction solution in vapour phase, there is no need to predetermine the required amount of water, which is dependent on the molecular weight of the soft block polymer component. Also, the critical point of the reaction, which is near stoichiometric conditions, is approached very slowly and established more easily when the water is added continuously to the reaction solution in its vapour phase than when the water is added manually in liquid phase. The reaction is also more self-going and performed more easily when the steps of manual drop-wise addition of water are eliminated. Moreover, when a predetermined amount of water is added manually to the reaction solution, it is important that all of the added water is reacted and that the water does not evaporate, which is not the case when the water is added in its vapour phase. Nevertheless, considering the above described, the inventive method can be performed with the manual drop-wise addition of water, which will be illustrated below in the illustrative examples of producing the inventive polyureaurethane material.

It is not observed that the water vapour immediately condenses to liquid phase when entering the reaction flask even if a ice-water bath is used, and without wishing to be bound by theory, it is believed that a part of the synthesising reaction, which will be described in further detail below, takes place in the vapour phase of the water. However, the water vapour can in the reaction solution be brought from vapour phase to liquid phase water by a suitable change of the reaction conditions, such as a decrease in pressure or temperature, for instance by the use of ice-water baths. The method is nevertheless well functionable without taking any such active measurements, the result being that the synthesis of the resulting polymer takes slightly longer time, which will be illustrated in the examples as set forth below.

With the inventive method one can produce a variety of polyureaurethane materials by using suitable soft block components and diisocyante groups.

Non-limiting examples of suitable soft block components that can be used with the inventive method, and that can be the soft block component in the inventive material, are currently believed to be various polyesters, polyethers and diols or any combinations thereof. The polyester block is preferably made from lactones but can also be made from dicarboxylic acids and diols. Example of polyester blocks with particulate interest are made from lactones such as glycolide, lactide, epsilon-caprolactone, trimethylene carbonate or paradioxanone using ringopening polymerisation resulting in homopolymers or copolymers. Various dicarboxylic acids like succinic acid, glutaric acid, adipic acid, maleic or fumaric acid can be reacted with various diols like ethyleneglycol, propyleneglycol and butandiol but also various polyetherblocks like polyethyleneglycol, polypropyleneglycol or various copolymers between ethyleneoxide and propyleneoxide.

A desired property in the non-limiting examples given above for the various types of polyester blocks is that they are soft at body temperature to impart certain softness to the material. The glass transition temperature of the soft blocks should therefore be chosen so that the glass transition temperature is below body temperature and more preferably below room temperature.

Non-limiting examples of polyethers that can be used in the soft block is polyethyleneglycol, polypropyleneglycol, or copolymers of ethyleneoxide and propyleneoxide, so called pluronics. Also short chain diols like butanol can be used instead of polyols in the soft block. One reason to have a polyether in the soft block is to increase the water absorption

to give the final material gel like properties, i.e. the polyureaurethane material swells in water and possesses gel like properties. A further example of soft block components that will impart gel like properties to the material is various forms of carbohydrates containing plurality of alcohol functions like hyalauronic acid, hemicellulose and the like.

By in the inventive method, using the soft block components in a multiarmed structure, i.e. when they have more than two reactive hydroxylgroups, the polyureaurethane material produced will have a crosslinked structure.

Non-limiting examples of suitable diisocyante groups that can be used in the synthesizing of the inventive material as well as in the inventive method are for instance LDI, HDI, TDI, MDI and HMDI.

Illustrated in figure 1 and 2 are shown as examples one possible hard block of an inventive linear polyureaurethane polymer when produced by using LDI as the diisocyante group. Fig. 1 illustrates a strictly linear hard block and fig.2 illustrates a hard block when comprising a short chain branch. The groups referred to as R thus represent the soft block component and the groups R' are thus consistent with the R'-groups in (5). In both fig. 1 and fig. 2 the hard block comprises three LDI derived groups. As seen in figure 1, when the hard block of the resulting polymer is strictly linear, the LDI derived groups are linked via urea linkages. In figure 2 is seen how the LDI derived group in the chain branch is linked via a biuret linkage.

Another possible chain branch group is allophanate if the chain branching is at a urethane group. The proportion of chain branching is however much less than the proportion of linearity in the hard block. This is partly due to the fact that the reaction between isocyanate groups and amine groups, that is the formation of urea groups, is faster than the formation of biuret and allophanate groups, see M. Spirkova et al., Polymer Bulletin 22, 1989, 191-198 "Extent of side reactions and gelation of polyether polyurethanes", which further shows that the allophanate and biuret groups are consumed by the addition of amines.

Another article by M. Spirkova; M. Spirkova et al. J Macromol. Sci.-Chem., A24 (10) 1151-1166, 1987, "Side reactions in the formation of polyurethanes: Model reactions between phenylisocyanate and 1-butanol", as well as the article by I.C. Kogon in J of Organic Chemistry, vol. 24, 1959, 83-86, "Chemistry of Aryl Isocyanates: Rate and Equilibrium Constants for the Formation of Ethyl $\alpha,\gamma$-diarylallophanate", further support the fact that the formation of biuret and allophanate, as well as isocyanurate groups, are equilibrium reactions, which is not the case for the formation of urethane and urea groups.

Yet other possible side reactions during the synthesis of the polymer material, see examples below, is the formation of isocyanurate (mentioned above) and urethdione groups. However, as will be shown below, these reactions are reversible by the addition of amine groups so that the equilibrium is shifted towards the isocyante and away from the side reaction.

As mentioned above and as will be seen in the experiments below, other diisocyante groups besides LDI can be used as well. This is not illustrated in any figure such as 1 and 2, but the principles explained above apply also to the hard block of a linear polyureaurethane material synthezied with other diisocyanate groups.

## Examples of the production of the inventive polyureaurethane material

### Example 1

### Production of a polyureaurethane material synthesized by using LDI and PCL, with a mean value of the number of diisocyante derived groups present in the hard blocks equal to at least 4.8

<u>Soft block component synthesis</u>

To a dried 250 ml round bottom flask, cooled under argon, was added in a glove-box, 28.58 g (0.251 mole) of epsilon-caprolactone, 0.68 g (0.0076 mole) of 1,4-butandiol and 0.12 g (0.3 mmole) of stannous octoate. The polymerization was performed at 110°C for 24 hours. The product, the soft block component, was a two armed poly(epsilon-caprolactone) (PCL) having a OH-group at each end of the molecule, which was precipitated in methanol and dried in vacuum over phosphopentoxide, $P_2O_5$. The obtained PCL had a length, or a degree of polymerization (DP), of 40. The soft block component synthesis herein described, is a well known procedure in the art.

<u>Prepolymer component synthesis</u>

To a dried 250 ml three-necked round bottom reaction flask, was added 1.61 g (7.6 mmol) of LDI in the form of lysine methylester diisocyanate, whereupon 5.3 g (1.14 mmol) of the above described soft block component, PCL, dissolved in 20 ml dimethylformamide (DMF), was added drop-wise during three hours and left over night with mechanical stirring, giving a molar ratio of 6.7:1 (LDI:PCL), and with a dryness of approximately 26%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.44 g (3.9 mmol) of the catalyst diazobicyclo[2.2.2] octane (DABCO), dissolved in 5 ml of DMF, was then added to the prepolymer component during stirring. Water vapour was thereafter created, whereupon nitrogen ($N_2$) flow was applied to the water vapour apparatus, set to two bubbles/sec, in order for the nitrogen to carry the water vapour to the reaction flask. The reaction flask was cooled by the use of an ice water bath, in order for the water vapour to condense to liquid phase and be added to the reaction solution. The molecular weight of the polymerizing polymer is increasing rapidly and the viscosity of the reaction solution started to increase after approximately 5 hours, whereupon further DMF was added in order to dissolve the reaction solution enabling further polymerization. This procedure was repeated throughout the polymerization until the synthesis was ended after approximately 11 hours. A total of 17 ml of DMF had then been added since the polyureaurethane synthesis had started. The polymer product was thereafter precipitated in water using a conventional mixer and subsequently filtrated, whereupon the DMF was removed from the precipitated polymer by stirring over night in water during heating, approximately 60°C. The DMF free polyureaurethane polymer was filtrated and dried in vacuum over phosphopentoxide.

**Example 2**

**Production of polyureaurethane synthesized by using LDI and PCL, with a mean value of the number of diisocyante derived groups present in the hard blocks equal to at least 8**

Soft block component synthesis

The soft block component synthesis was identical to the soft block component synthesis as described in example 1.

Prepolymer component synthesis

To a dried 250 ml three-necked round bottom reaction flask was added 1.72 g (8.12 mmol) of LDI in the form of lysine methylester diisocyanate, whereupon 3.4 g (0.731 mmol) of the PCL produced in the soft block component synthesis dissolved in 20 ml DMF was added drop-wise during six hours and left over night with mechanical stirring, giving a molar ratio of 11.1:1 (LDI:PCL) and a dryness of approximately 25%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.44 g (3.9 mmol) of DABCO, dissolved in 5 ml of DMF, was then added to the prepolymer component and left for approximately one hour during stirring. Water vapour was thereafter created, whereupon $N_2$-flow was applied to the water vapour apparatus, set to four bubbles/sec, in order for the nitrogen to carry the water vapour to the reaction flask. The reaction flask was cooled by the use of an ice water bath, in order for the water vapour to condense to liquid phase and be added to the reaction solution. The molecular weight of the polymerizing polymer is increasing rapidly and the viscosity of the reaction solution started to increase after approximately 4-4,5 hours, whereupon further DMF was added in order to dissolve the reaction solution enabling further polymerization. This procedure was repeated throughout the polymerization until the synthesis was ended after approximately 26 hours. A total of 13 ml of DMF had then been added since the polyureaurethane synthesis had started. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 3**

**Production of polyureaurethane synthesized by using LDI and PCL, with a mean value of the number of diisocyante derived groups present in the hard blocks equal to at least 9.8**

**Soft block component synthesis**

The soft block component synthesis was identical to the soft block component synthesis as described in example

1.

Prepolymer component synthesis

To a dried 250 ml three-necked round bottom reaction flask was added 2.21 g (10.43 mmol) of LDI in the form of lysine methylester diisocyanate, whereupon 4.02 g (0.865 mmol) of the PCL produced in the soft block component synthesis dissolved in 20 ml DMF was added drop-wise during four hours and left over night with mechanical stirring, giving a molar ratio of 12,04:1 (LDI:PCL) and a dryness of approximately 19%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.59 g (5.23 mmol) of DABCO, dissolved in 6 ml of DMF, was then added to the prepolymer component and left for approximately one hour during stirring. Water vapour was thereafter created, whereupon $N_2$-flow was applied to the water vapour apparatus, set to three bubbles/sec, in order for the nitrogen to carry the water vapour to the reaction flask, which was held at a temperature of approximately 45-50°C. The molecular weight of the polymerizing polymer is increasing and the viscosity of the reaction solution started to increase after approximately 7 hours, whereupon 4ml of DMF was added in order to dissolve the reaction solution enabling further polymerization. After approximately 23 hours, the viscosity of the reaction solution once again started to increase and further 4 ml of DMF was added, after 24 hours yet another 1 ml of DMF and after 29 hours 2 ml of DMF, at which point in time the water vapour supply was cut off and an argon flow was applied to the reaction solution by taking generally known measurements. After approximately 47 hours, water vapour was once again carried to the reaction solution by the ways above described, and 2 ml of DMF was added. 4ml of DMF and 2 ml of DMF was added after approximately 48 hours and 54 hours, respectively, at which point in time the water vapour supply was once again cut off and an argon flow was applied to the reaction solution by the ways above described. After approximately 69 hours the reaction solution started to gel and further 6 ml of DMF was added and the reaction was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 4**

**Production of polyureaurethane synthesized by using LDI and PCL, with a mean value of the number of diisocyante derived groups present in the hard blocks equal to at least 11.6**

Soft block component synthesis

The soft block component synthesis was identical to the soft block component synthesis as described in example 1.

Prepolymer component synthesis

To a dried 250 ml three-necked round bottom reaction flask was added 2.67 g (12.60 mmol) of LDI in the form of lysine methylester diisocyanate, whereupon 3.89 g (0.834 mmol) of the PCL produced in the soft block component synthesis dissolved in 20 ml DMF was added drop-wise during four hours and left over night with mechanical stirring, giving a molar ratio of 15.07: 1 (LDI:PCL) and a dryness of approximately 20%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.72 g (6.382 mmol) of DABCO, dissolved in 7 ml of DMF, was then added to the prepolymer component and left for approximately one hour during stirring. Water vapour was thereafter created, whereupon $N_2$-flow was applied to the water vapour apparatus, set to three bubbles/sec, in order for the nitrogen to carry the water vapour to the reaction flask, which was held at a temperature of approximately 45-50°C. The molecular weight of the polymerizing polymer is increasing and after approximately 7 hours the reaction solution turned yellowish. After approximately 23 hours, the reaction solution started to gel and 6 ml of DMF was added. 1 ml of

DMF and 3 ml of DMF was added after approximately 24 hours and 25 hours, respectively. After approximately 28 hours further 4 ml of DMF was added, at which point in time the water vapour supply was cut off and an argon flow was applied to the reaction solution by taking generally known measurements. After approximately 48 hours, the argon flow was cut off with water vapour once again being carried to the reaction solution by the ways above described, and 2 ml of DMF was added. After approximately 54 hours the water vapour supply was once more cut off and an argon flow was applied by the ways above described, which argon flow was cut off after approximately 69 hours with water vapour instead being carried to the reaction solution. After approximately 75 hours 2 ml of DMF was applied, the water vapour supply was cut off and an argon flow was applied. The reaction solution turned into a soft gel after approximately 96 hours, whereupon 4 ml of DMF was added and the reaction was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 5**

**Production of polyureaurethane synthesized by using HDI and PCL, with a mean value of the number of diisocyante derived groups present in the hard blocks equal to at least 9.7**

Soft block component synthesis

The soft block component synthesis was identical to the soft block component synthesis as described in example 1.

Prepolymer component synthesis

To a dried 250 ml three-necked round bottom reaction flask was added 1.49 g (8.86 mmol) of HDI, whereupon 3.85 g (0.828 mmol) of the PCL produced in the soft block component synthesis dissolved in 15ml DMF was added drop-wise during 3.5 hours and left over night with mechanical stirring, giving a molar ratio of 10.7:1 (HDI:PCL) and a dryness of approximately 22%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.51 g (4.52 mmol) of DABCO, dissolved in 4 ml of DMF, was then added to the prepolymer component and left for approximately one hour during stirring. Water vapour was thereafter created, whereupon $N_2$-flow was applied to the water vapour apparatus, set to 1-2 bubbles/sec, in order for the nitrogen to carry the water vapour to the reaction flask. The reaction flask was cooled by the use of an ice water bath, in order for the water vapour to condense to liquid phase and be added to the reaction solution. The molecular weight of the polymerizing polymer is increasing and the viscosity of the reaction solution started to increase after approximately 5 hours, at which point in time the reaction solution turned whitish. In order to dissolve the reaction solution enabling further polymerization, another 2 ml of DMF was added after approximately 8 hours, 4 ml of DMF after approximately 12 hours and yet another 5 ml of DMF after approximately 13 hours, at which point in time no further water vapour was carried to the solution. After approximately 24 hours the reaction solution started to gel and further 8 ml of DMF was added and the reaction was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 6**

**Production of polyureaurethane synthesized by using HDI and PCL, with a mean value of the number of diisocyante derived groups present in the hard blocks equal to at least 2.3**

Soft block component synthesis

The soft block component synthesis was identical to the soft block component synthesis as described in example 1.

Prepolymer component synthesis

To a dried 250 ml three-necked round bottom reaction flask was added 0.51 g (3.04 mmol) of HDI, whereupon 4.15 g (0.893 mmol) of the PCL produced in the soft block component synthesis dissolved in 15ml DMF was added drop-wise during 3.5 hours and left over night with mechanical stirring, giving a molar ratio of 3.4:1 (HDI:PCL) and a dryness of approximately 21 %. Thus, as a result, a prepolymer component was obtained.

Polyureaurethane synthesis

The prepolymer component described above, was previously placed in the 250 ml three-necked round bottom reaction flask, which was connected to a water vapour apparatus. 0.18 g (1.595 mmol) of DABCO, dissolved in 3 ml of DMF, was then added to the prepolymer component and left for approximately one hour during stirring. Water vapour was thereafter created, whereupon $N_2$-flow was applied to the water vapour apparatus, set to 1-2 bubbles/sec, in order for the nitrogen to carry the water vapour to the reaction flask. The reaction flask was cooled by the use of an ice water bath, in order for the water vapour to condense to liquid phase and be added to the reaction solution. After approximately 5 hours the reaction solution turned whitish and after approximately 25 hours the viscosity of the reaction solution started to increase. 4 ml of DMF was added after approximately 26 hours in order to dissolve the reaction solution enabling further polymerization. After approximately 32 hours another 2 ml of DMF was added, at which point in time no further water vapour was carried to the solution. Yet another 2 ml of DMF was added after approximately 52 hours and after approximately 54 hours the reaction solution started to gel and further 1 ml of DMF was added and the reaction was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 7**

**Production of polyureaurethane synthesized by using TDI and PCL in a molar ratio of 10:2:1**

Soft block component synthesis

The soft block component synthesis followed the same procedure as described in example 1 but the obtained PCL had a length, or a degree of polymerization (DP), of 42. The skilled person is well capable of modifying the teachings disclosed in the soft block component synthesis of example 1 and thus end up with PCL of different degrees of polymerization.

Prepolymer component synthesis

To a dried 250 ml three-necked round bottom reaction flask was added 0.96 g (5.82 mmol) of TDI, whereupon 2.65 g (0.570 mmol) of the PCL produced in the soft block component synthesis dissolved in 10 ml DMF was added drop-wise during 4 hours and left over night with mechanical stirring, giving a molar ratio of 10.21:1 (TDI:PCL) and a dryness of approximately 27%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.12 g (1,06 mmol) of DABCO, dissolved in 1 ml of DMF, was then added to the prepolymer component and left for approximately one hour during stirring. Water vapour was thereafter created, whereupon $N_2$-flow was applied to the water vapour apparatus, set to 1-2 bubbles/sec, in order for the nitrogen to carry the water vapour to the reaction flask, which was held at a temperature of approximately 45°C. After approximately 1 hour 2 ml of DMF was added and after approximately 1.5 hours the viscosity of the solution was increasing rapidly whereupon further 6 ml of DMF was added and the reaction was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 8**

**Production of polyureaurethane synthesized by using MDI and PCL in a molar ratio of 10.25:1**

Soft block component synthesis

The soft block component synthesis followed the same procedure as described in example 1 but the obtained PCL had a length, or a degree of polymerization (DP), of 42. The skilled person is well capable of modifying the teachings disclosed in the soft block component synthesis of example 1 and thus end up with PCL of different degrees of polymerization.

Prepolymer component synthesis

To a dried 250 ml three-necked round bottom reaction flask was added 1.46 g (6.09 mmol) of MDI, whereupon 2.76 g (0.594 mmol) of the PCL produced in the soft block component synthesis dissolved in 11 ml DMF was added drop-wise during 4 hours and left over night with mechanical stirring, giving a molar ratio of 10.25:1 (MDI:PCL) and a dryness of approximately 28%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.21 g (1,86 mmol) of DABCO, dissolved in 1 ml of DMF, was then added to the prepolymer component and left for approximately one hour during stirring. Water vapour was thereafter created, whereupon $N_2$-flow was applied to the water vapour apparatus, set to 1-2 bubbles/sec, in order for the nitrogen to carry the water vapour to the reaction flask, which was held at a temperature of approximately 45°C. After approximately 1 hour 2 ml of DMF was added and after approximately 2 hours another 0.03 g of DABCO and yet another 2 ml of DMF was added. After approximately 2.5 hours the viscosity of the solution was increasing rapidly whereupon further 8 ml of DMF was added and the reaction was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 9**

**Production of polyureaurethane synthesized by using LDI and PCL, with a mean value of the number of diisocyante derived groups present in the hard blocks equal to at least 4.2 performed with manual drop-wise addition of water**

Soft block component synthesis

The soft block component synthesis was identical to the soft block component synthesis as described in example 1.

Prepolymer component synthesis

To a dried 250 ml three-necked round bottom reaction flask was added 0.754 g (3.56 mmol) of LDI in the form of lysine methylester diisocyanate, whereupon 2.68 g (0.576 mmol) of the PCL produced in the soft block component synthesis dissolved in 8 ml DMF was added drop-wise during three hours and left over night with mechanical stirring, giving a molar ratio of 6.12:1 (LDI:PCL) and a dryness of approximately 28%. Thus, as a result, a prepolymer component was obtained.

Polyureaurethane synthesis

The prepolymer component described above, was previously placed in the 250 ml three-necked round bottom reaction flask. 0.2 g (1.77 mmol) of DABCO, dissolved in 1 ml of DMF, was then added to the prepolymer component and left for approximately one hour during stirring. A standard solution comprised of DMF and water, with a water concentration of 2.07 mmol/g, was thereafter continuously added drop-wise to the reaction solution. The molecular weight of the polymerizing polymer is now increasing and the viscosity of the reaction solution started to increase after

approximately 4 hours. After 6 hours another 1 ml of DMF was added in order to dissolve the reaction solution enabling further polymerization. The reaction was allowed to continue for approximately one week with the continuously drop-wise addition of the standard solution. At that point in time, a total of 1.44 g standard solution had been added. The polymer product was thereafter precipitated in water and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 10**

**Production of polyureaurethane synthesized by using TDI and PCL in a molar ratio of 3.93:1**

Soft block component synthesis

The soft block component synthesis followed the same procedure as described in example 1 but the obtained PCL had a length, or a degree of polymerization (DP), of 42. The skilled person is well capable of modifying the teachings disclosed in the soft block component synthesis of example 1 and thus end up with PCL of different degrees of polymerization.

Prepolymer component synthesis

To a dried 250 ml three-necked round bottom reaction flask was added 0.88 g (5.03 mmol) of TDI, whereupon 6.23 g (1.28 mmol) of the PCL produced in the soft block component synthesis dissolved in 26 ml DMF was added drop-wise during 4 hours and left over night with mechanical stirring, giving a molar ratio of 3.93:1 (TDI:PCL) and a dryness of approximately 21 %. Thus, as a result, a prepolymer component was obtained.

Polyureaurethane synthesis

The prepolymer component described above, was previously placed in the 250 ml three-necked round bottom reaction flask, which was connected to a water vapour apparatus. 0.19 g (1.7 mmol) of DABCO, dissolved in 2 ml of DMF, was then added to the prepolymer component and left for approximately one hour during stirring. Water vapour was thereafter created, whereupon $N_2$-flow was applied to the water vapour apparatus, set to 1-2 bubbles/sec, in order for the nitrogen to carry the water vapour to the reaction flask, which was held at a temperature of approximately 45°C. After approximately 1 hour 1 ml of DMF was added and after approximately 1.5 hours another 1 ml was added. During the following 3 hours DMF was added continuously and the total amount of added DMF was 32ml. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Example 11**

**Production of polyureaurethane synthesized by using MDI and PCL in a molar ratio of 4.2 :1**

Soft block component synthesis

The soft block component synthesis followed the same procedure as described in example 1 but the obtained PCL had a length, or a degree of polymerization (DP), of 42. The skilled person is well capable of modifying the teachings disclosed in the soft block component synthesis of example 1 and thus end up with PCL of different degrees of polymerization.

Prepolymer component synthesis

To a dried 250 ml three-necked round bottom reaction flask was added 0.63 g (2.50 mmol) of MDI, whereupon 3.04g (0.60 mmol) of the PCL produced in the soft block component synthesis dissolved in 12 ml DMF was added drop-wise during 4 hours and left over night with mechanical stirring, giving a molar ratio of 4.2:1 (MDI:PCL) and a dryness of approximately 23%. Thus, as a result, a prepolymer component was obtained.

Polyureaurethane synthesis

The prepolymer component described above, was previously placed in the 250 ml three-necked round bottom reaction flask, which was connected to a water vapour apparatus. 0.08 g (0.76 mmol) of DABCO, dissolved in 1 ml of DMF, was then added to the prepolymer component. The polymer solution increased in viscosity as soon as the catalyst was added therefore was another 5ml of DMF added. Water vapour was thereafter created, whereupon $N_2$-flow was applied to the water vapour apparatus, set to 1-2 bubbles/sec, in order for the nitrogen to carry the water vapour to the reaction flask, which was held at a temperature of approximately 45°C. During the first 20 minutes 11ml DMF was added and after approximately one hour the synthesis was ended. The polymer product was thereafter precipitated in water using a conventional mixer and subsequently filtrated. DMF was removed from the precipitated polymer by stirring over night in water during heating, approximately 60°C, and subsequently rinsed. The DMF free polyureaurethane polymer was filtrated and dried in vacuum over phosphopentoxide.

**Experiment to determine the formation of isocyanurate groups**

To a dry and clean Schlenk-flask was added 0.5758 g of LDI and 0.1578 g of DABCO, whereupon 2.2 ml of DMF was added to give a 20% by weight solution. The reaction proceeded at room temperature during stirring. The synthesising reaction solution turned yellow and subsequently produced a soft gel. 0.0602 g of the gel was added to a vial together with 0.40 ml of DMF and 0.1237 g of octyl amine. The gel was dissolved within 20 hrs.

The fact that the gel is dissolvable excludes the possibility that the polymer material produced is cross linked, since a cross linked material would not have been dissolved. The article by M. Spirkova et al in Polymer Bulletin 22 referred to above, also supports that the solubility of the gel confirms the absence of isocyanurates, since the trifunctionality of the isocyanurate would cause branching and hence cross linking. It is believed that the amines added consume any isocyanurates formed, as well as any formed two-functional urethdione groups. So, the reaction is reversible by the addition of amine groups so that the equilibrium is shifted towards the isocyanate.

The experiment was repeated but using the catalyst $Sn(Oct)_2$ instead of DABCO. The amounts used were 0.5906 g LDI, 0.5677 g $Sn(Oct)_2$, and 2.3 ml DMF. This synthesis did not gel. When investigating the synthesising solution with IR-spectroscopy, isocyanates could be seen even after 45 hrs. The conclusion that $Sn(Oct)_2$, does not catalyse isocyanurate formation was made.

**Analysis of the polyureaurethane materials produced in example 1-6 and 9-11**

**Measurement of intrinsic viscosity**

The intrinsic viscosity of the polyureaurethane materials produced in examples 1-6, and 9, respectively, as well as of the soft block component PCL, was measured using conventional capillary viscometers at 25°C using hexafluoroisopropanol (HFIP) as a solvent. As for the materials produced in examples 10-11, the intrinsic viscosity was measured from the polymerisation solution, respectively, by the use of the same method using DMF as a solvent. See table 2 for results.

**Measurement of thermal properties**

The thermal properties, i.e. the glass transition temperatures (Tg) and the melting temperature ($T_m$) of the materials produced in examples 1-6, and 9-11, respectively, was measured using conventional differential scanning calorimetry (DSC) technique. The samples were heated to 180°C and then cooled to -80°C and then heated again with a heating rate of 10°C per minute. The calculations were performed at the second heating. For results, see table 2.

**Mechanical measurements**

Mechanical measurements for the polyureaurethane materials produced in examples 1-5, respectively, were performed by dissolving the materials, respectively, in HFIP. The material produced in example 1 had a concentration in HFIP of 9 weight percent, and the material produced in example 2 had a concentration in HFIP of 8 weight percent. Film samples of the materials, respectively, were produced using 400μm blades, air dried for one day and subsequently dried in vacuum for three days (six samples of the material produced in ex. 1, five samples for ex. 2, eight samples of the material produced in ex. 3 and 4 and eight samples for ex. 5). Dog bone shaped samples were punched out and measured with a micrometer screw. The samples produced from the materials of ex. 1 and 2 had a thickness in the range of 19-32 μm, the samples produced from the materials of ex. 3 and 4 had a thickness in the range of 16-19 μm and the samples produced from the material of ex. 5 had a thickness in the range of 14-17μm.

As for the polyureaurethane materials produced in example 10 and 11, films were made directly from the polymerisation solution in the same way as described above. The polymer concentration was approximately 10 weight percent for both solutions. The films were air dried for 48 hours and then vacuum dried for 10 days. Film sample thicknesses were in the range of 12-16 μm for example 10 and 23-32 μm for example 11.

The strain at break and the elongation modulus of the film materials, respectively, were determined in conventional stress-strain tests, see table 2 for results. The deformation rate used for the stress-strain test was 100 mm/min.

**Determination of linearity of the produced polyureaurethanematerial**

As mentioned above, the fact that the materials produced are dissolvable in for instance HFIP, as explained above under heading "mechanical measurements", excludes the possibility that said materials would be cross linked. A cross linked material would not have been dissolved. In order to further exclude any presence of cross linked particles, two of the polymers synthesized with LDI having different mean lengths of the hard block (see below under heading "determinations of the hard block length") were chosen; namely the polymer produced in example 1 and 4, respectively. Samples of said polymers were dissolved in 1,1,1,3,3,3-hexafluor isopropanol over night. For the polymer produced in example 1, 105 mg of said polymer sample were dissolved in 120 ml HFIP and as for the polymer produced in example 4, 114 mg of the sample was dissolved in the same volume of HFIP. Each of the polymer solutions was thereafter filtered through a 0.45μm polytetrafluorethylene filter, which filter prior to the filtration had been weighed. The filters were then dried in an oven at 65°C for two days, whereupon the filters were weighed a second time. The results can be seen below in table 1. After filtration and drying no mass increase of the filters could be observed. Thus, no cross linked particles could be detected

**Table 1**

| Sample | Polymer mass (mg) | HFIP (ml) | Filter mass, before (g) | Filter mass, after (g) |
|---|---|---|---|---|
| PULT ex.1 | 105 | 120 | 3.0240 | 3.0240 |
| PULT ex. 4 | 114 | 120 | 2.9870 | 2.9869 |

Also one of the polymer synthesized with TDI and one of the polymer synthesized with MDI were chosen in order to exclude the presence of cross linked parts; namely the polymer produced in example 10 and 11, respectively. As for the polymer produced in example 10, 1.0 ml of the polymerisation solution was taken and diluted with DMF to 100 ml. The mass of the polymer sample was 109 mg. For the polymer produced in example 11, 1.0 ml of the polymerisation solution was taken as well and diluted with DMF to 100 ml. The mass of the polymer sample was 114 mg. Each of the polymer solutions was thereafter filtered through a syringe filter of the kind described above, which filter prior to the filtration had been weighed, whereupon another 20 ml of DMF was used to flush the filter. The filters were air dried for 24 hours and then dried in vacuum at 60°C for 1 week. No changes in filter weight could thereafter be observed, and thus no cross linked particles could be detected.

**Determinations of the hard block length**

The mean length of the hard blocks of the materials produced in examples 1-6, and 9, respectively,, i.e. the mean degree of polymerization of the hard blocks derived by diisocyante groups without the presence of any chain extender, was determined by the use of conventional nuclear magnetic resonance (NMR) technique, using deuterated HFIP and $D_2O$ in a capillary inside the NMR-tube.

The NMR-spectra from the polyureauretahane material produced in example 1 and 2 is shown in figure 3 and 4, respectively. The degree of polymerization of the hard block of the materials, respectively, was determined by dividing the integration for peak F, IF, (0.23615 and 0.39956, respectively) with the integration for peak D, $I_D$, (2) times the degree of polymerization of the soft block component PCL (DP=40), see formula (7) below. Peak F corresponds to the protons adjacent to the primary isocyanate, as indicated in the polymer formula structure shown above the spectra in the figures, and as also indicated by circles in figure 1. Peak D corresponds to the two protons on the alpha carbon on the PCL, see the polymer formula structure shown above the spectra. Thus, for the polyureaurethane material produced in example 1, a mean DP-value of 4.8 for the hard blocks was determined and for the polyureaurethane material produced in example 2, a mean DP-value of 8.0.

At the time of writing, it is undetermined whether the peak F includes shift from protons from a shorter branching or not, that is shift from protons indicated by circles in figure 2. If so, the mean hard block length would be the same as calculated by the use of formula (7). If peak F does not include such shift, the true mean hard block length may be somewhat longer since the hard block then can comprise a diisocyanate derived group not counted for. The same

situation also applies for other possible diisocyante derived groups present in the main chain besides urea groups. Therefore, the mean DP value of the hard block as calculated by the use of formula (7) with values from the NMR-spectra, should be interpreted as to be the lowest mean value of the number of diisocyanate derived groups present in a hard block of the linear polyureaurethane material, see table 2 for results.

$$DP(LDI) = \frac{I_F}{I_D} \times 40 \qquad (7)$$

The evaluation of the NMR-spectra obtained for the polyureaurethane material produced in example 3-4 (not shown), follows the same scheme as described above, as is well known for the person skilled in the art. Also the mean DP value for the hard blocks in the materials produced in example 5-6 is readily determined by the skilled person having an NMR-spectra of the produced material at hand (not shown), for results see table 2.

**Table 2**

| Sample | In. Visc. (dl/g) | Tg (°C) | $T_m$(°C) | Mean DP value of hard blocks | Strain at break (%) | E-Modulus (MPa) | Yield of polymerization (%) |
|---|---|---|---|---|---|---|---|
| PCL | 0.28 | -62 | 52 | | | | |
| PUU ex.1 | 2.21 | -59.8 | 46 | 4.8 | 980 (156) | 146 (12) | 87 |
| PUU ex.2 | 2.04 | -62.4 | 43.1 | 8.0 | 801 (113) | 179 (20) | 82 |
| PUU ex.3 | 2.31 | -63.3 | 40.6 | 9.8 | 712 (29) | 211 (22) | 88 |
| PUU ex. 4 | 2.52 | -58.9 | 38.8 | 11.6 | 548 (56) | 235 (31) | 86 |
| PUU ex.5 | 3.54 | -58.8 | 32.6 | 9.7 | 857 (83) | 89 (12) | 82 |
| PUU ex.6 | 0.38 | -60.8 | 53.2 | 2.3 | | | |
| PUU ex.9 | 0.84 | -59 | 50 | 4.2 | | | |
| PUU ex 10 | 0.72 | -57.4 | 42.2 | - | 804 (30) | 124 (28) | 81 |
| PUU ex 11 | 0.63 | -57.0 | 41.1 | - | 347 (62) | 43 (11) | 86 |

The polyureaurethane materials produced in examples 1-5, respectively, had a high viscosity, which confirms the fact that it is possible to synthesize the inventive polyureaurethane material with a high molecular weight. However, when contemplating the viscosity value of the materials, the hydrogen bondings in the polyureaurethane material, as discussed above, should also be considered since the strong hydrogen bondings will contribute in increasing the viscosity of the polymer material.

The mechanical properties of the produced inventive polureaurethane material, reflects the length of the hard blocks thereof. For instance, the polyureaurethane material produced in example 2 exhibit a lower elongation than the material of example 1, but a higher modulus. Values in parentheses are standard deviation values.

The intrinsic viscosity of the polyureaurethane material produced in example 9, i.e. the polyureaurethane material produced with manual drop-wise addition of water, is lower in comparison with the viscosity of the materials produced in example 1-5. The viscosity value of 0.84 dl/g rather suggests a powder than a linear polymer. However, it is currently believed that keeping the same amount of totally added standard solution, as given above in example 9, but extending the time period during which the polymerization reaction is allowed to continue with the continuously drop-wise addition of said standard solution, will raise the viscosity value of the produced polymer material.

The number of diisocyantes derived groups linked in the hard block of the inventive polyureaurethane polymer produced, can thus be varied by selecting a desired molar ratio between the diisocyanate group and the soft block component used in the prepolymer component synthesis. The examples herein disclose a lowest mean value of the number of diisocyanate derived groups present in the hard blocks of the inventive polyureaurethane polymer in the range

of 2.3-11.6, but it is currently believed that polyureaurethane materials with a number of diisocyante derived groups in the hard block exceeding said range can be produced. Also, the length, or the DP, of the soft block component can be varied in order to prepare a polyureaurethane polymer with the desired properties. For instance, a soft block component with a higher value of DP, will give rise to a polyureaurethane material that is harder than a polyureaurethane material that is produced by using a soft block component with a lower value of DP.

In examples 1-8, the use of PCL as the soft block component and the use of LDI, HDI, TDI, MDI as the diisocyante groups is described. However, the inventive polyureaurethane material can be produced by using other diisocyanate groups, such as for instance HMDI, as already mentioned above in connection with the non-limiting examples of other soft block components that can be used other than PCL. Also, in the examples the LDI used is in the form of lysine methylester diisocyante, but said LDI can be used in other forms, such as for instance in the form of lysine ethylester diisocyanate.

The solvent that is used to dissolve the soft block component in the prepolymer component synthesis, and which solvent is continuously added to the reaction solution in order to enable further polymerization, is chosen depending on the soft block component used. Herein is described the solvent DMF that is used in combination with the soft block component PCL. The skilled person is however fully capable of choosing a suitable solvent for each of the enumerated soft block components.

Likewise, the catalyst DABCO is herein described, but the skilled person is fully capable of choosing other suitable catalyst in order to prepare the inventive polyureaurethane material, such as for instance $Sn(Oct)_2$. It is also to be noted that the synthesizing reaction is spontaneous and there is in fact no need of a catalysts, the result being that the synthesizing reaction takes longer time. It may also be preferred that no catalysts is used in order to minimize for instance cross-linking of the polymer material.

Moreover, a biomolecule or the like can be linked to the inventive polyureaurethane polymer, or in fact be the actual soft block component, in order to (further) enhance the biocompatibility of the inventive polymer material. The biomolecule(s) linked to/comprised in the polyureaurethane material is/are preferably chosen dependent on the intended application of the material, such as for instance proteins, polypeptides, peptides, nucleic acids, carbohydrates, lipids, growth factors, therapeutic substances etc.

## Claims

1. A non-crosslinked polyureaurethane material comprising at least one soft block component and at least one hard block synthesized by using diisocyante groups **characterized in that** the polyureaurethane material is produced without the use of any chain extender, whereupon in the at least one hard block, one diisocyante derived group is linked to another diisocyanate derived group without the presence of any chain extender component.

2. A non-crosslinked polyureaurethane material according to claim 1, **characterized in that** the diisocyante groups used are in the form of one of lysine diisocyanate (LDI), hexamethylene-diisocyanate (HDI), 4,4'-methylene-bis (phenyl isocyanate) (MDI), 4,4'-methylenebis(cyclohexane isocyante) (HMDI) and 2,4-toluene diisocyante (TDI).

3. A non-crosslinked polyureaurethane material according to claims 1-2, **characterized in that** the diisocyante groups used are in the form of lysine diisocyanate (LDI).

4. A non-crosslinked polyureaurethane material according to any of claims 1-3, **characterized in that** the mean value of the number of diisocyanate derived groups in the at least one hard block is at least 2.3.

5. A non-crosslinked polyureaurethane material according to any of claims 1-4, **characterized in that** the mean value of the number of diisocyanate derived groups in the at least one hard block is in the range from at least 2.3 to at least 11.6.

6. A non-crosslinked polyureaurethane material according to any of claims 1-5 **characterized in that** the at least one soft block component is a polyester or a polyether.

7. A non-crosslinked polyureaurethane material according to claim 6 **characterized in that** the polyester is made from any of the monomers glycolide, lactide, epsilon-caprolactone, trimethylene carbonate, paradioxanone or any copolymer thereof.

8. A non-crosslinked polyureaurethane material according to claim 6 **characterized in that** the polyester is made from any dicarboxylic acid, a diol or alcohole terminated polyether.

**9.** A non-crosslinked polyureaurethane material according to claim 8 **characterized in that** the dicarboxylic acid is succinic acid, glutaric acid, adipic acid, maleic acid or fumaric acid and that the diol is ethyleneglycol, propyleneglycol, butandiol, polyethyleneglycol, polypropyleneglycol or various copolymers between ethyleneoxide and propyleneoxide

**10.** A non-crosslinked polyureaurethane material according to claim 6 **characterized in that** the polyether is made from diols, polyethyleneglycol, polypropyleneglycol, or copolymers of ethyleneoxide and propyleneoxide.

**11.** A non-crosslinked polyureaurethane material according to any of claims 1-10 **characterized in that** the at least one soft block component is a biomolecule or that the material is linked to a biomolecule.

**12.** A non-crosslinked polyureaurethane material according to claim 11 **characterized in that** the biomolecule is a carbohydrate

**13.** A non-crosslinked polyureaurethane material according to any of claims 1-12 **characterized in that** the material swell in water and possess gel like properties.

**14.** Method for producing a polyureaurethane material, such as the material according to claim 1, comprising:

reacting a soft block component with a diisocyante group in order to prepare a prepolymer component and defining a reaction solution,
adding water to the reaction solution.

**15.** Method according to claim 14, wherein the water is brought to the reaction solution in vapour phase.

**16.** Method according to claims 14-15, **characterized in that** the water is brought to liquid phase in the reaction solution.

**17.** Method according to any of claims 14-16, **characterized in that** the soft block component is selected among the group consisting of polyethers and polyesters.

**18.** Method according to any of claims 14-17, **characterized in that** the diisocyanate group is selected among the group consisting of lysine diisocyanate (LDI), hexamethylene-diisocyanate (HDI), 4,4'-methylene-bis(phenyl isocyanate) (MDI), 4,4'-methylenebis(cyclohexane isocyante) (HMDI) and 2,4-toluene diisocyante (TDI).

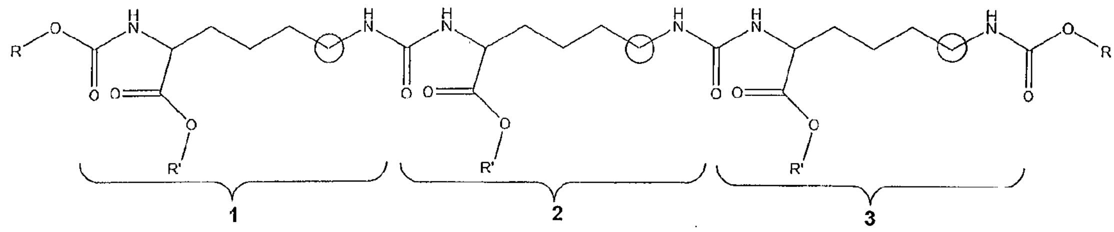

Fig. 1

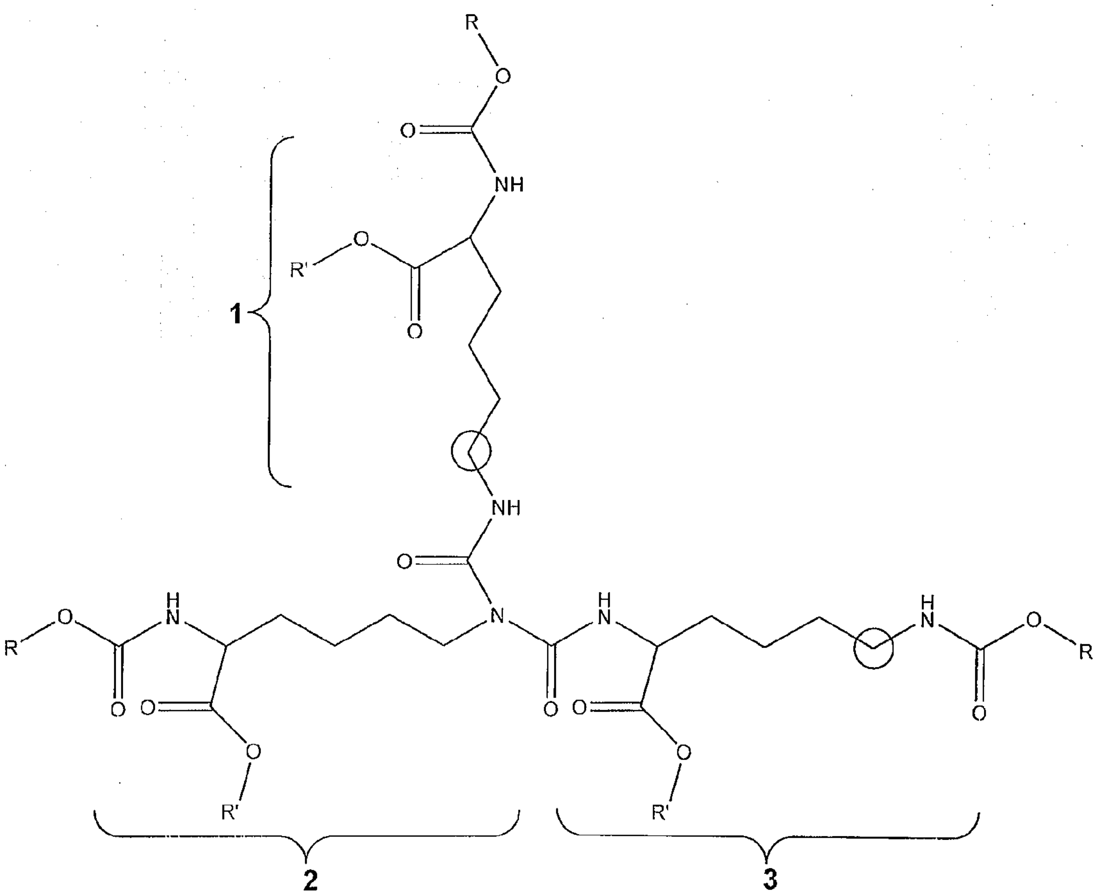

Fig. 2

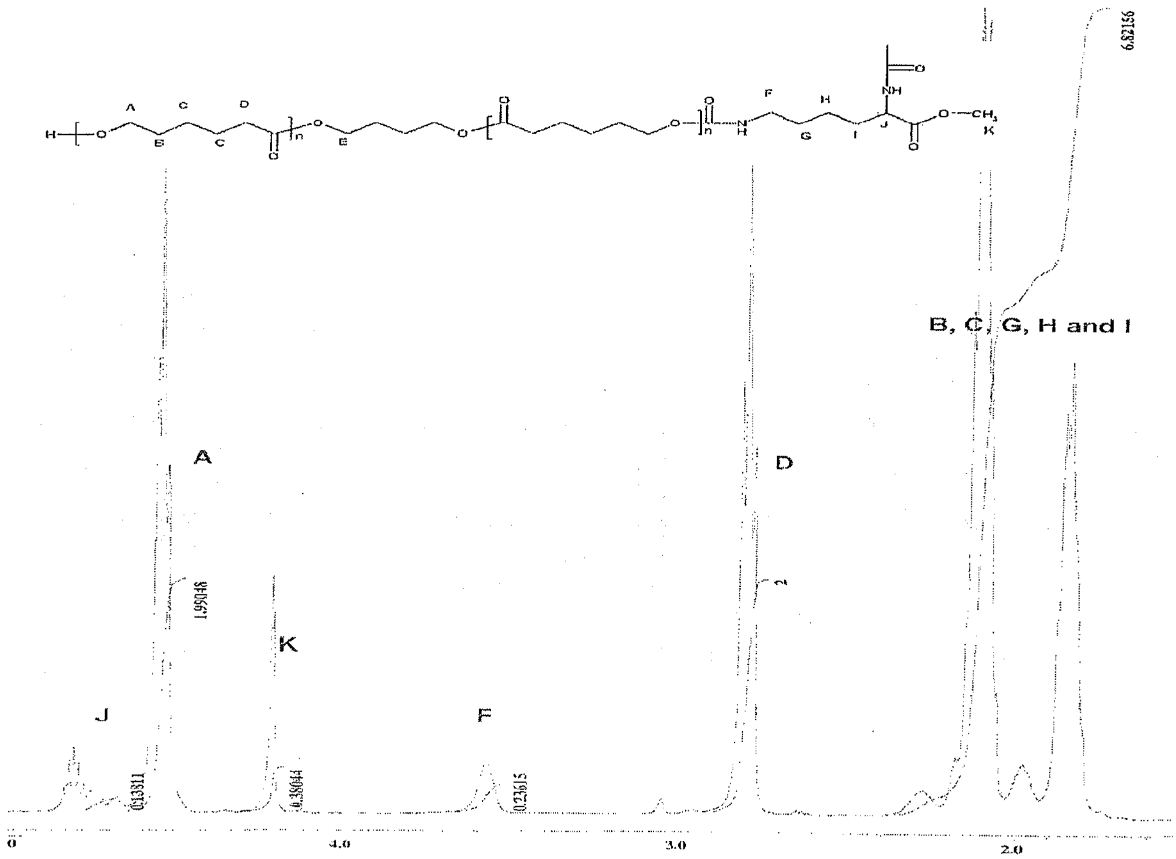


Fig. 3. NMR-spectra of the polyureaurethane material produced in example 1.

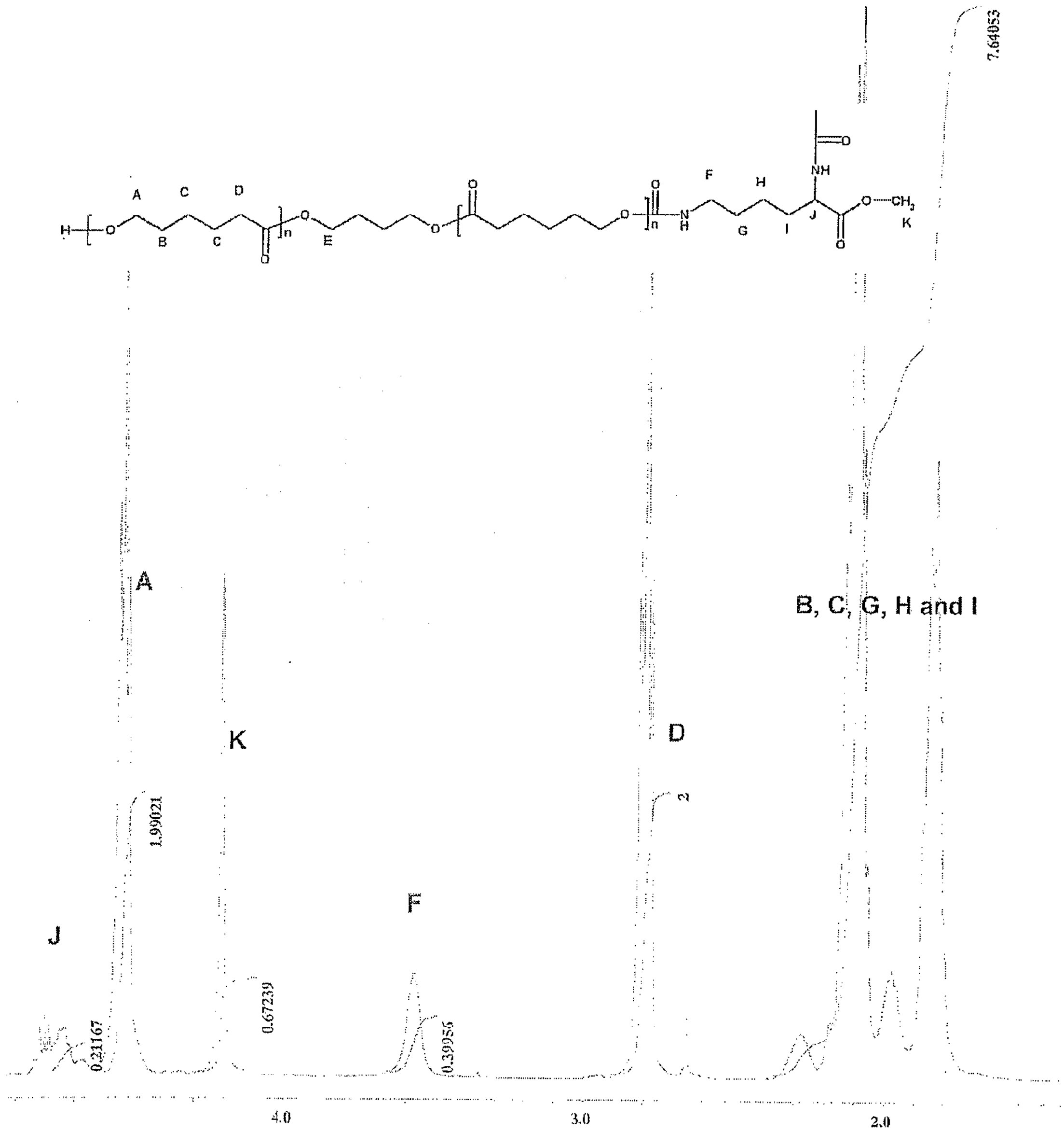


Fig. 4. NMR-spectra of the polyureaurethane material produced in example 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **JIAN-YING ZHANG, PH.D et al.** Three-Dimensional Biocompatible Ascorbic Acid-Containing Scaffold for Bone Tissue Engineering. *TISSUE ENGINEERING,* 2003, vol. 9 (6), 1143-1157
- **E. YILGÖR.** Hydrogen bonding: a critical parameter in designing silicone copolymers. *Polymer,* 2001, vol. 42, 7953-7959
- **J. T. GARRETT.** Microphase separation of segmented poly(urethane urea) block copolymers. *Macromolecules,* 2000, vol. 33, 6353-6359
- **M. SPIRKOVA et al.** Extent of side reactions and gelation of polyether polyurethanes. *Polymer Bulletin,* 1989, vol. 22, 191-198
- **M. SPIRKOVA et al.** Side reactions in the formation of polyurethanes: Model reactions between phenylisocyanate and 1-butanol. *J Macromol. Sci.-Chem.,* 1987, vol. A24 (10), 1151-1166
- **I.C. KOGON.** Chemistry of Aryl Isocyanates: Rate and Equilibrium Constants for the Formation of Ethyl α,γ-diarylallophanate. *J of Organic Chemistry,* 1959, vol. 24, 83-86